# FASCICULE DE BREVET EUROPEEN

(11) **EP 0 945 596 B1**
(45) Date de publication et mention de la délivrance du brevet: **04.08.2004**
(21) Numéro de dépôt: 99400725.0
(22) Date de dépôt: 25.03.1999
(51) Int. Cl.: F23R 3/00

(54) **Structure de protection thermique**
Hitzeschützende Struktur
Thermal protection structure

(30) Priorité: 26.03.1998 FR 9803728
(43) Date de publication de la demande: 29.09.1999
(73) Titulaire: AEROSPATIALE MATRA, 75781 Paris Cédex 16 (FR)
(72) Inventeur: Bouchez, Marc, 18000 Bourges (FR); Levine, Vadim, Moscou, Fédération de Russie (RU); Avrachkov, Valery, 117 334 Moscou, Fédération de Russie (RU)
(74) Mandataire: Bonnetat, Christian

(56) Documents cités:
- FR-A- 2 752 916
- US-A- 5 348 446

## Description

La présente invention concerne des structures de protection thermique.

Bien que non exclusivement, une telle structure de protection thermique est plus particulièrement appropriée à la construction d'éléments devant être soumis à de très hautes températures, et en particulier à la construction de chambres de combustion, notamment de statoréacteurs, ou de plaques externes de protection thermique d'engins volants à vitesses élevées, par exemple au-delà de Mach 10 ou Mach 12.

Pour pouvoir être utilisée dans les applications précitées, une telle structure doit présenter certaines caractéristiques, notamment :
- une masse et une épaisseur réduites ; et
- si elle utilise un fluide de refroidissement, une résistance hydraulique la plus faible possible et une utilisation réduite de ce fluide.

On connaît différentes solutions pour réaliser une structure de protection thermique destinée à de telles applications.

Une première solution connue consiste à utiliser du matériau ablatif, dont de fines couches superficielles sont ablatées au cours de son utilisation comme structure de protection. Toutefois, cette solution usuelle présente notamment les inconvénients suivants :
- la surface du matériau et donc la forme de la structure sont modifiées lors de l'utilisation, ce qui peut être gênant, notamment lorsque la forme a une incidence sur le fonctionnement de l'engin ou du dispositif muni de ladite structure ;
- cette structure n'est pas réutilisable ; et surtout
- une épaisseur élevée de matériau ablatif est nécessaire, ce qui suppose une masse importante.

Une deuxième solution connue consiste à utiliser des moyens de refroidissement par convection. Ces moyens comportent un fluide de refroidissement, par exemple de l'hydrogène, qui circule dans un conduit.

Une paroi dudit conduit qui est en contact avec l'environnement externe chaud est réalisée en un matériau très bon conducteur thermique et peu épais de manière à amener la chaleur audit fluide de refroidissement qui est continuellement régénéré. Une telle mise en oeuvre nécessite donc une quantité de fluide importante et un débit élevé. A cet effet, on augmente généralement la pression dudit fluide, ce qui nécessite de renforcer les parois du conduit entraînant ainsi une augmentation de coût, d'épaisseur et/ou de masse. De plus, en raison d'une différence importante de l'expansion linéaire entre ladite paroi thermiquement conductrice et le reste de la structure, il existe des risques de fissure et, par conséquent, de destruction de ladite structure.

Une troisième solution connue consiste à utiliser des moyens de refroidissement par éjection, qui comportent une paroi poreuse perméable au fluide et un fluide de refroidissement qui est éjecté, à travers ladite paroi poreuse, dans l'environnement externe chaud. Cette éjection permet de créer à l'extérieur de la structure une couche limite de gaz de température réduite, permettant de protéger thermiquement ladite structure. Toutefois, cette solution n'est généralement efficace que localement. De plus, le fluide de refroidissement éjecté est bien entendu perdu, ce qui est gênant lorsque ledit fluide est présent en quantité réduite ou, surtout, lorsque ledit fluide correspond au combustible, par exemple de l'hydrogène, d'un engin volant muni de ladite structure, ce qui peut entraîner une limitation ou une chute de la poussée dudit engin volant.

En outre, on connaît une quatrième solution pour protéger thermiquement un élément, en utilisant une barrière thermique. Cette solution qui représente une protection passive utilise un matériau imperméable et thermiquement isolant. Toutefois, cette solution n'est généralement efficace que pour une durée limitée.

Par ailleurs, en plus des inconvénients déjà mentionnés, aucune des solutions précitées n'est en mesure de protéger efficacement et suffisamment une chambre de combustion d'un statoréacteur pour des vols au-delà de Mach 12.

Par le document FR-2 752 916, on connaît une chemise de protection thermique pour une chambre de combustion de turboréacteur. Cette chemise de protection thermique comprend :
- une virole qui est revêtue d'une pluralité d'anneaux disposés bout à bout et constitués chacun d'une pluralité de tuiles ;
- des moyens de refroidissement par convection, qui comportent un air de refroidissement qui circule dans ladite virole ; et
- des moyens de refroidissement par impact, qui éjectent l'air de refroidissement à l'extérieur de ladite virole.

La présente invention a pour objet de remédier aux inconvénients précités. Elle concerne une structure de protection thermique, de réalisation simple et peu coûteuse, et surtout extrêmement efficace, pouvant être utilisée dans une chambre de combustion ou un réacteur à hautes températures, en particulier dans une chambre de combustion d'un statoréacteur à vitesses de vol élevées, ou comme protection thermique de surfaces externes d'aéronefs ou de spationefs.

A cet effet, selon l'invention, ladite structure de protection thermique du type comportant :
- des moyens de refroidissement par éjection, qui éjectent un premier fluide de refroidissement à l'extérieur de ladite structure ;
- une barrière thermique formant au moins une partie de la paroi externe de ladite structure, ladite barrière thermique étant perforée de manière à permettre l'éjection dudit premier fluide de refroidissement ; et
- des moyens de refroidissement par convection, qui comportent un second fluide de refroidissement qui circule à l'intérieur de la structure par rapport à ladite barrière thermique, lesdits premier et second fluides de refroidissement étant issus d'un même fluide,
est remarquable en ce qu'elle comporte de plus :
- au moins un conduit dans lequel circule ledit fluide comportant au moins l'un desdits premier et second fluides de refroidissement ; et
- des moyens pour régler la pression dudit fluide à l'intérieur dudit conduit.

On notera que la barrière thermique, qui est usuellement réalisée de façon imperméable, est perforée dans la structure conforme à l'invention. Bien qu'une telle utilisation aille à l'encontre de l'état de la technique, l'effet de protection thermique obtenu par cette barrière thermique n'est pas réduit, en raison de sa combinaison avec lesdits moyens de refroidissement par éjection qui éjectent un fluide froid à travers les trous de ladite barrière thermique et empêchent ainsi un passage de la chaleur à travers ces trous.

De plus, l'écoulement de fluide est donc divisé en un écoulement longitudinal dudit second fluide de refroidissement (dans ladite structure) et en un écoulement transversal dudit premier fluide de refroidissement (à l'extérieur de ladite structure).

Grâce à l'utilisation d'un seul et même fluide :
- on simplifie ladite structure ;
- on permet par un seul réglage de la pression et/ou du débit de régler les deux parties de fluide, comme on le verra ci-dessous ; et
- on permet d'optimiser l'écoulement dudit fluide.

On notera de plus que l'on va également à l'encontre de l'état de la technique qui enseigne que les moyens de refroidissement par convection doivent comporter une paroi externe thermiquement très conductrice. Or, dans la structure précitée, ladite paroi externe est formée par la barrière thermique qui produit un abaissement de la température.

Par conséquent, la baisse de température supplémentaire devant être produite par lesdits moyens de refroidissement par convection est réduite. Ceci permet notamment d'être moins exigeant en ce qui concerne les propriétés et l'efficacité desdits moyens de refroidissement, et notamment du fluide de refroidissement utilisé.

En outre, ladite structure de protection thermique qui comporte simultanément les trois éléments précités, à savoir les moyens de refroidissement par éjection, les moyens de refroidissement par convection et la barrière thermique, permet de plus d'optimiser lesdits éléments, notamment par une minimisation du débit de fluide et de la masse des parois de la structure, tout en assurant l'intégrité et les tenues mécanique et thermique de cette dernière.

Par ailleurs, de façon avantageuse, lesdits moyens pour régler la pression dudit fluide à l'intérieur dudit conduit engendrent une pression qui est fonction de la pression existant à l'extérieur de ladite structure, par exemple une pression qui est supérieure ou égale au double de la pression externe maximale.

En outre, avantageusement, lesdits moyens de refroidissement par convection comportent un réseau de fils thermiquement conducteurs, ledit réseau étant perméable audit fluide et agencé de préférence dans ledit conduit au contact d'au moins l'une de ses parois. Ceci permet d'optimiser l'échange thermique entre le fluide de refroidissement et la ou les parois (chaudes) desdits moyens de refroidissement.

Afin d'optimiser l'écoulement de fluide, de façon avantageuse :
- ladite barrière thermique est perforée de manière à présenter une résistance hydraulique qui est fonction de la résistance hydraulique à l'intérieur dudit conduit. De préférence, la résistance hydraulique de ladite barrière thermique est inférieure ou égale au dixième de la résistance hydraulique interne audit conduit ; et/ou
- la structure comporte de plus des moyens pour régler le débit dudit fluide dans ledit conduit.

Les figures du dessin annexé feront bien comprendre comment l'invention peut être réalisée. Sur ces figures, des références identiques désignent des éléments semblables.
La figure 1 illustre schématiquement et partiellement une structure conforme à l'invention et montre de plus un diagramme illustrant la pression à l'extérieur de ladite structure.
La figure 2 est une coupe schématique selon la ligne II-II de la figure 1.

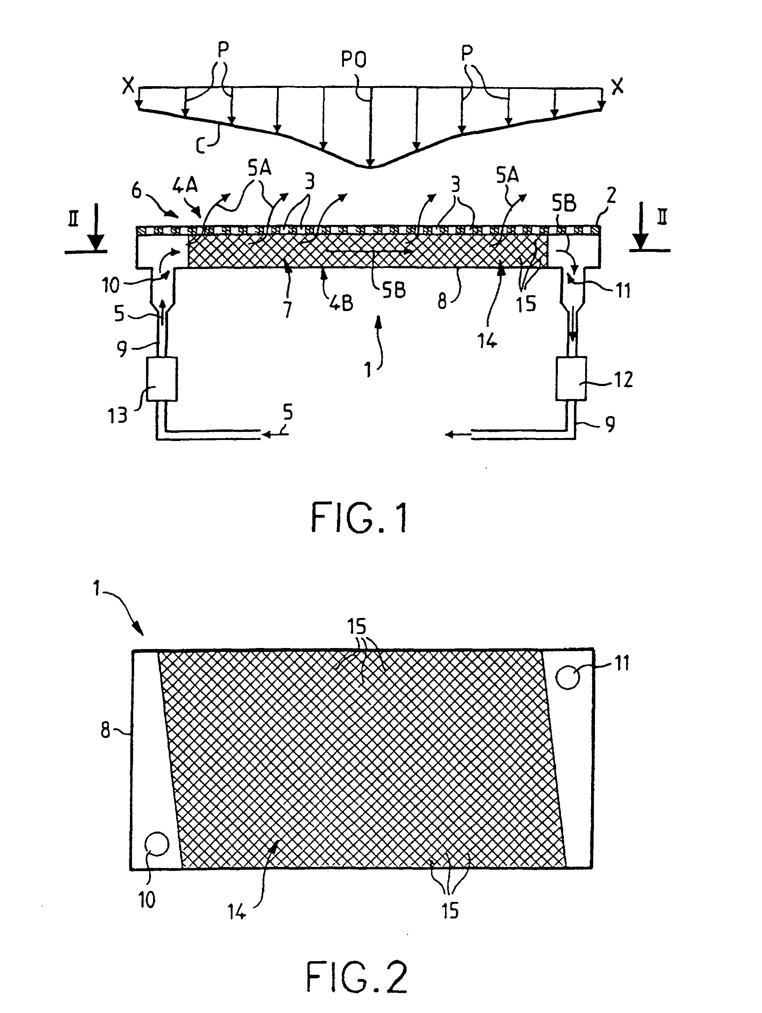

La structure 1 conforme à l'invention et représentée schématiquement sur les figures 1 et 2 est une structure de protection thermique susceptible d'assurer une protection contre des températures très élevées.

Elle peut notamment être utilisée dans une chambre de combustion ou un réacteur à hautes températures, en particulier dans une chambre de combustion d'un statoréacteur à vitesses de vol élevées (destiné à réaliser par exemple un vol hypersonique à longue durée), ou comme protection thermique de surfaces externes d'aéronefs ou de spationefs.

Dans l'exemple représenté, ladite structure 1 est réalisée sous forme d'un panneau de forme générale plane. Bien entendu, dans le cadre de la présente invention, la structure de protection thermique peut également présenter une forme différente, par exemple une forme courbe. Ladite structure conforme à l'invention peut en particulier être utilisée comme bord d'attaque, notamment d'une dérive ou d'une hélice.

Selon l'invention, ladite structure 1 comporte :
- une barrière thermique 2, de type connu, formant la paroi externe soumise à une température élevée de ladite structure 1. Ladite barrière thermique 2 est munie de trous traversants 3 ;
- des moyens 4A de refroidissement par éjection, qui éjectent un premier fluide de refroidissement à l'extérieur de ladite structure 1, à travers lesdits trous traversants 3 de la barrière thermique 2, comme illustré par des flèches 5A. Ce fluide éjecté forme, de façon usuelle, une couche limite de température réduite sur la face externe 6 de la barrière thermique 2 ; et
- des moyens 4B de refroidissement par convection, qui comportent un second fluide de refroidissement qui circule dans ladite structure 1, comme illustré par des flèches 5B, et notamment dans un conduit 7 réalisé sous forme d'une chambre parallélépipédique, dont la paroi externe est formée par la barrière thermique 2, et qui présente une paroi interne 8.

Selon l'invention, lesdits premier et second fluides à écoulements respectifs transversaux et longitudinaux, illustrés par des flèches 5A et 5B, sont issus d'un même fluide, dont l'écoulement est représenté par des flèches 5. Aussi, lesdits moyens 4A et 4B comportent un seul et même circuit 9 d'alimentation de fluide, précisé ci-dessous.

Ainsi, grâce à l'invention, on obtient une protection thermique particulièrement efficace, due notamment aux effets conjugués des éléments de protection thermique 2, 4A et 4B combinés ensemble. La structure 1 peut donc parfaitement remplir toutes les exigences requises dans les applications précitées.

De plus, grâce à la combinaison précitée conforme à l'invention desdits éléments 2, 4A et 4B, ladite structure 1 est de réalisation particulièrement simple, compacte et peu coûteuse.

En outre, selon l'invention, ledit circuit 9 d'alimentation de fluide qui débouche dans le conduit 7 par des ouvertures 10 et 11 comporte :
- des moyens 12, de type connu, pour régler la pression dudit fluide dans ledit circuit 9, et notamment dans le conduit 8 ; et
- des moyens 13, de type connu, pour régler le débit dudit fluide dans ledit circuit 9, et donc également dans ledit conduit 7.

Sur la figure 1, on a de plus représenté un graphique montrant une courbe C illustrant la pression P existant sur la face externe 6 de la structure 1 le long de sa direction longitudinale X-X.

Selon l'invention, les moyens 12 règlent la pression de manière à engendrer dans le conduit 7 une pression qui est fonction de la pression P existant à l'extérieur de ladite structure 1.

Dans un mode de réalisation particulier, ils engendrent une pression qui est supérieure ou égale au double de la pression externe maximale PO.

Une telle différence de pression permet une éjection supercritique, ou au moins critique, dudit premier fluide de refroidissement à l'extérieur de la structure 1.

Par conséquent, lorsque l'environnement externe chaud comprend un écoulement de fluide chaud, par exemple dans le cas d'un moteur, une telle éjection empêche tout contact entre ce fluide chaud et la face externe 6 de la structure 1, ce qui permet de la protéger mécaniquement.

Lesdits moyens 4B comportent de plus un réseau 14 à trois dimensions, formé d'une structure tramée de fils métalliques 15 bon conducteurs thermiques. Ledit réseau 14 est agencé dans ledit conduit 7 en contact de ses parois 2 et 8 et permet d'augmenter l'échange thermique entre le fluide de refroidissement (flèches 5B) et lesdites parois 2 et 8. De plus, ledit réseau 14 est très perméable, de sorte qu'il ne présente qu'une résistance hydraulique réduite à l'écoulement dudit fluide (flèches 5B).

Ceci permet de réduire l'épaisseur de la paroi 8 et la masse desdits moyens 4B.

Selon l'invention, les trous 3 (notamment leurs nombre, taille et répartition) et ledit réseau 14 sont adaptés réciproquement de manière à obtenir une relation déterminée de leurs résistances hydrauliques respectives. De préférence, on cherche à obtenir une résistance hydraulique de la barrière thermique 2 qui est inférieure ou égale au dixième de la résistance hydraulique dudit réseau 14.

Ceci permet de régler précisément les proportions entre la quantité de fluide éjecté (flèches 5A) et la quantité de fluide remis en circulation (flèches 5B) et servant au refroidissement par convection.

On notera de plus que l'efficacité opérationnelle de la structure 1 est déterminée en particulier par les deux paramètres suivants, qui sont réglables selon l'invention :
- l'écoulement du fluide ; et
- le rapport entre la quantité de fluide éjecté et la quantité de fluide utilisé pour la convection,
ces deux paramètres étant réglés à des valeurs réduites pour la mise en oeuvre de la présente invention.

Par ailleurs, dans le cas où la structure 1 est agencée sur un engin volant non représenté, brûlant un combustible, par exemple de l'hydrogène, on peut utiliser ledit combustible comme fluide de refroidissement, puisque la quantité de fluide éjecté est faible et qu'ainsi la structure 1 conforme à l'invention ne réduit pas la poussée et les performances dudit engin volant.

## Revendications

1. Structure de protection thermique, ladite structure comportant :
- des moyens (4A) de refroidissement par éjection, qui éjectent un premier fluide de refroidissement à l'extérieur de ladite structure (1) ;
- une barrière thermique (2) formant au moins une partie de la paroi externe de ladite structure (1), ladite barrière thermique (2) étant perforée de manière à permettre l'éjection dudit premier fluide de refroidissement ; et
- des moyens (4B) de refroidissement par convection, qui comportent un second fluide de refroidissement qui circule à l'intérieur de la structure (1) par rapport à ladite barrière thermique (2), lesdits premier et second fluides de refroidissement étant issus d'un même fluide,
**caractérisée en ce qu'**elle comporte de plus :
- au moins un conduit (7) dans lequel circule ledit fluide comportant au moins l'un desdits premier et second fluides de refroidissement ; et
- des moyens (12) pour régler la pression dudit fluide à l'intérieur dudit conduit (7).

2. Structure selon la revendication 1,
**caractérisée en ce que** lesdits moyens (12) pour régler la pression à l'intérieur dudit conduit (7) engendrent une pression qui est fonction de la pression (P) existant à l'extérieur de ladite structure (1).

3. Structure selon la revendication 2,
**caractérisée en ce que** lesdits moyens (12) engendrent une pression qui est supérieure ou égale au double de la pression maximale (PO) existant à l'extérieur de ladite structure (1).

4. Structure selon l'une quelconque des revendications 1 à 3,
**caractérisée en ce que** lesdits moyens (48) de refroidissement par convection comportent un réseau (14) de fils (15) thermiquement conducteurs, ledit réseau (14) étant perméable audit fluide.

5. Structure selon la revendication 4,
**caractérisée en ce que** ledit réseau (14) est agencé dans ledit conduit (7) et est au contact d'au moins l'une des parois (8) dudit conduit (7).

6. Structure selon l'une des revendications 1 à 5,
**caractérisée en ce que** ladite barrière thermique (2) est perforée de manière à présenter une résistance hydraulique qui est fonction de la résistance hydraulique à l'intérieur dudit conduit (7).

7. Structure selon la revendication 6,
**caractérisée en ce que** la résistance hydraulique de ladite barrière thermique (2) est inférieure ou égale au dixième de la résistance hydraulique à l'intérieur dudit conduit (7).

8. Structure selon l'une des revendications 1 à 7,
**caractérisée en ce qu'**elle comporte de plus des moyens (13) pour régler le débit dudit fluide dans ledit conduit (7).

## Patentansprüche

1. Hitzeschützende Struktur mit:
- Vorrichtungen (4A) für Ejektionskühlung, die ein erstes Kühlfluid in die Außenumgebung der Struktur (1) ejizieren;
- eine Wärmesperre (2), die zumindest einen Teil der Außenwand der Struktur (1) bildet, wobei die Wärmesperre perforiert ist, um die Ejektion des ersten Kühlfluids zu erlauben; und
- Konvektionskühlgeräte (4B), die ein zweites Kühlfluid aufweisen, das im Innern der Struktur (1) entsprechend der Wärmesperre (2) zirkuliert, wobei das erste und das zweite Kühlfluid demselben Fluid entstammen;
**dadurch gekennzeichnet, dass** sie außerdem Folgendes aufweist:
- mindestens eine Leitung (7), in der das Fluid zirkuliert, und die zumindest eines der beiden Kühlfluide aufweist; und
- Vorrichtungen (12) zur Regelung des Drucks des Fluids im Innern der Leitung (7).

2. Struktur gemäß Anspruch 1,
**dadurch gekennzeichnet, dass** die Vorrichtungen (12) zur Regelung des Drucks im Innern der Leitung (7) einen Druck erzeugen, der vom Druck (P) außerhalb der Struktur (1) abhängt.

3. Struktur gemäß Anspruch 2,
**dadurch gekennzeichnet, dass** die Vorrichtungen (12) einen Druck erzeugen, der größer oder gleich dem zweifachen maximalen Druck (PO) außerhalb der Struktur (1) ist.

4. Struktur gemäß einem der Ansprüche 1 bis 3,
**dadurch gekennzeichnet, dass** die Konvektionskühlgeräte (4B) ein Netz (14) aus wärmeleitfähigen Drähten (15) aufweisen, wobei das Netz (14) fluiddurchlässig ist.

5. Struktur gemäß Anspruch 4,
**dadurch gekennzeichnet, dass** das Netz (14) in der Leitung (7) angeordnet ist und mit mindestens einer der Wände (8) der Leitung (7) Kontakt hat.

6. Struktur gemäß einem der Ansprüche 1 bis 5,
**dadurch gekennzeichnet, dass** die Wärmesperre (2) perforiert ist, so dass sie einen Strömungswiderstand aufweist, der vom Strömungswiderstand im Innern der Leitung (7) abhängt.

7. Struktur gemäß Anspruch 6,
**dadurch gekennzeichnet, dass** der Strömungswiderstand der Wärmesperre (2) kleiner oder gleich dem Zehntel des Strömungswiderstands im Innem der Leitung (7) ist.

8. Struktur gemäß einem der Ansprüche 1 bis 7,
**dadurch gekennzeichnet, dass** sie außerdem Vorrichtungen (13) aufweist, um den Durchfluss des Fluids in der Leitung (7) zu regeln.

## Claims

1. Thermal protection structure, said structure comprising:
- means (4A) for cooling by ejection, which eject a first cooling fluid outside said structure (1);
- a thermal barrier (2) forming at least one part of the outer wall of said structure (1), said thermal barrier (2) being perforated so as to make it possible to eject said first cooling fluid; and
- means (4B) for cooling by convection, which comprise a second cooling fluid circulating inside the structure (1) in relation to said thermal barrier (2) said first and second cooling fluids being obtained from the same fluid,
**characterized in that** it furthermore comprises:
- at least one pipe (7), in which said fluid comprising at least one of said first and second cooling fluids circulates; and
- means (12) for adjusting the pressure of said fluid inside said pipe (7).

2. Structure according to Claim 1, **characterized in that** said means (12) for adjusting the pressure inside said pipe (7) generate a pressure which is a function of the pressure (P) prevailing outside said structure (1).

3. Structure according to Claim 2, **characterized in that** said means (12) generate a pressure which is higher than or equal to double the maximum pressure (PO) prevailing outside said structure (1).

4. Structure according to any one of Claims 1 to 3, **characterized in that** said means (4B) for cooling by convection comprise a network (14) of thermally conductive wires (15), said network (14) being permeable to said fluid.

5. Structure according to Claim 4, **characterized in that** said network (14) is arranged in said pipe (7) and is in contact with at least one of the walls (8) of said pipe (7).

6. Structure according to one of Claims 1 to 5, **characterized in that** said thermal barrier (2) is perforated so as to have a flow resistance which is a function of the flow resistance within said pipe (7).

7. Structure according to Claim 6, **characterized in that** the flow resistance of said thermal barrier (2) is lower than or equal to one tenth of the flow resistance within said pipe (7).

8. Structure according to one of Claims 1 to 7, **characterized in that** it comprises, furthermore, means (13) for adjusting the flow rate of said fluid in said pipe (7).
